# EUROPEAN PATENT APPLICATION

(11) **EP 3 818 827 A2**
(43) Date of publication of application: **12.05.2021**
(21) Application number: 20206969.6
(22) Date of filing: 11.11.2020
(51) Int. Cl.: A01N 25/02, A01N 55/00, A01N 59/00

(54) **SANITIZING AND ANTIMICROBIAL SOLUTION WITH SILANE QUATERNARY AMMONIUM WITH HYPOCHLOROUS ACID**

(30) Priority: 11.11.2019 US 201916679596
(71) Applicant: Parasol Medical LLC, Buffalo Grove, Illinois 60089 (US)
(72) Inventor: Eddy, Patrick E., Allendale, MI 49401 (US); Eddy, Cassandra Ann, Allendale, MI 49401 (US)
(74) Representative: Boult Wade Tennant LLP

(57) **Abstract**

A disinfecting and antimicrobial solution comprises: hypochlorous acid; silane quaternary ammonium ion or salt thereof; and water. The hypochlorous acid can exist in the solution at a concentration of 0.1 to 1000 ppm. The silane quaternary ammonium ion or salt thereof can be one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, and 3-(trihydroxysilyl)propyldimethyloctadecyl ammonium chloride. The silane quaternary ammonium ion or salt thereof can be 0.1 to 10 percent by weight of the solution. The disinfecting and antimicrobial solution can further comprise isopropyl alcohol. The disinfecting and antimicrobial solution can further comprise an anolyte product of electrolysis of an aqueous solution of sodium chloride, and the anolyte product comprises the hypochlorous acid of the disinfecting and antimicrobial solution.

## Description

### BACKGROUND OF THE DISCLOSURE

The electrolysis of an aqueous solution of sodium chloride (sometimes referred to as a brine solution) generates hypochlorous acid (HOCI). More specifically, an electrolytic cell typically with a membrane permeable to sodium and chloride ions separates an anode from a cathode. At the anode, an acidic solution of hypochlorous acid, hydrochloric acid (HCI), and the hypochlorite ion (ClO⁻), is produced, as is oxygen (O₂) and chlorine (Cl₂) gases. The chlorine components are in equilibrium, and the dominant chemical is a function of pH, with hypochlorous acid being dominant at pH values between 2 and 7. At the cathode, a basic solution of sodium hydroxide (NaOH) is produced, as well as hydrogen (H₂) gas. The acidic solution generated at the anode is sometimes referred to as the "anolyte" or "acidic electrolyzed water." The basic solution generated at the cathode is sometimes referred to as the "catholyte" or "basic electrolyzed water." The combination of the two is sometimes referred to as "neutral electrolyzed water."

Hypochlorous acid has been used as a sanitizing agent, disinfecting agent, and an antimicrobial agent in various applications. Example applications for hypochlorous acid include disinfecting food processing surfaces and sanitizing medical equipment in hospitals. Hypochlorous acid very rapidly kills microorganisms by irreversibly reacting with membrane enzymes and structural proteins. The "catholyte," containing sodium hydroxide, has been utilized as a cleaning agent.

However, the reactivity of hypochlorous acid poses a problem in that hypochlorous acid cannot be a persistent or prophylactic antimicrobial agent. Similarly, the "anolyte" has a limited shelf-life with concentration of hypochlorous acid decreasing quickly as a function of time.

### BRIEF SUMMARY OF THE DISCLOSURE

The present disclosure solves that problem by combining a silane quaternary ammonium component with the hypochlorous acid. The silane quaternary ammonium component imparts a long-lasting antimicrobial component to the solution containing hypochlorous acid. Solutions that contain a silane quaternary ammonium component, when applied over a surface, result in the bonding of the silane quaternary ammonium component to the surface. The silane quaternary ammonium component does not expire via reaction in the same manner as hypochlorous acid does. Therefore, the silane quaternary ammonium component provides long-lasting antimicrobial efficacy, even if the hypochlorous acid has already reacted and thus expired, or if the hypochlorous acid in the solution has decreased in concentration. In a sense, the silane quaternary ammonium component provides a back-up antimicrobial function, in the event that the hypochlorous acid has reacted or has reduced concentration in the solution.

According to a first aspect of the present disclosure, a disinfecting and antimicrobial solution comprises: hypochlorous acid; silane quaternary ammonium ion or salt thereof; and water. In embodiments, the hypochlorous acid exists in the solution at a concentration of 0.1 to 1000 ppm. In embodiments, the hypochlorous acid exists in the solution at a concentration of 0.1 to 200 ppm. In embodiments, the hypochlorous acid exists in the solution at a concentration of 200 to 1000 ppm.

In embodiments, the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, and 3-(trihydroxysilyl)propyldimethyloctadecyl ammonium chloride. In embodiments, the silane quaternary ammonium ion or salt thereof is 0.1 to 10 percent by weight of the solution. In embodiments, the silane quaternary ammonium ion or salt thereof is 0.75 to 5 percent by weight of the solution. In embodiments, the silane quaternary ammonium ion or salt thereof is 1.9 to 2.1 percent by weight of the solution. In embodiments, the disinfecting and antimicrobial solution further comprises isopropyl alcohol.

In embodiments, the disinfecting and antimicrobial solution further comprises: an anolyte product of electrolysis of an aqueous solution of sodium chloride, and the anolyte product comprises the hypochlorous acid. In embodiments, the disinfecting and antimicrobial solution further comprises: a catholyte product of the electrolysis of the aqueous solution of sodium chloride that produced the anolyte product, and the catholyte product comprises sodium hydroxide.

According to a second aspect of the present disclosure, a disinfecting and antimicrobial solution comprises: 0.1 to 1000 ppm hypochlorous acid; 0.1 to 10 percent by weight silane quaternary ammonium ion or salt thereof; and water. In embodiments, the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, and 3-(trihydroxysilyl)propyldimethyloctadecyl ammonium chloride. In embodiments, the disinfecting and antimicrobial solution further comprises isopropyl alcohol.

According to a third aspect of the present disclosure, an antimicrobial solution comprises: sodium hydroxide; silane quaternary ammonium ion or salt thereof; and water. In embodiments, the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, and 3-(trihydroxysilyl)propyldimethyloctadecyl ammonium chloride. In embodiments, the silane quaternary ammonium ion or salt thereof is 0.1 to 10 percent by weight of the solution. In embodiments, the antimicrobial solution further comprises isopropyl alcohol. In embodiments, the antimicrobial solution further comprises: a catholyte product of the electrolysis of the aqueous solution of sodium chloride, the catholyte product comprising the sodium hydroxide. In embodiments, the antimicrobial solution further comprises: an anolyte product of the electrolysis of the aqueous solution of sodium chloride, the anolyte product comprising hypochlorous acid.

These and other features, advantages, and objects of the present disclosure will be further understood and appreciated by those skilled in the art by reference to the following specification, claims, and appended drawings.

### DETAILED DESCRIPTION

For purposes of description herein, it is to be understood that the specific devices and processes illustrated in the attached drawings, and described in the following specification are simply exemplary embodiments of the inventive concepts defined in the appended claims. Hence, physical characteristics relating to the embodiments disclosed herein are not to be considered as limiting, unless the claims expressly state otherwise.

Described herein is a disinfecting and antimicrobial solution. The disinfecting and antimicrobial solution includes hypochlorous acid, silane quaternary ammonium ion or salt thereof, and water.

In embodiments, the hypochlorous acid is the product of electrolysis of an aqueous solution of sodium chloride. In embodiments, the hypochlorous acid exists in the solution at a concentration of 0.1 to 1000 ppm, such as a concentration of 0.1 to 200 ppm, or a concentration of 200 to 1000 ppm.

In embodiments, the silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, and 3-(trihydroxysilyl)propyldimethyloctadecyl ammonium chloride. In embodiments, the silane quaternary ammonium ion or salt thereof is 0.1 to 10 percent by weight of the solution, such as 0.75 to 5 percent by weight of the solution, such as 1.9 to 2.1 percent by weight of the solution.

In embodiments, the disinfecting and antimicrobial solution further includes isopropyl alcohol.

In a particular embodiment, the disinfecting and antimicrobial solution comprises 0.1 to 1000 ppm hypochlorous acid, 0.1 to 10 percent by weight silane quaternary ammonium ion or salt thereof, and water. The solution can further include isopropyl alcohol.

In embodiments, the hypochlorous acid is a component of the anolyte of the electrolysis of an aqueous solution of sodium chloride. In such embodiments, the anolyte containing the hypochlorous acid is combined with a solution containing the silane quaternary ammonium ion or salt thereof. In a variation, the catholyte product of the electrolysis of the aqueous solution of sodium chloride is also added to the disinfecting and antimicrobial solution, thus supplying the aqueous solution with sodium hydroxide.

The addition of the silane quaternary ammonium ion or salt thereof provides long lasting antimicrobial activity that survives after the expiration of hypochlorous acid due to reaction or otherwise. The silane group of the silane quaternary ammonium ion bonds to the surface to which it is applied. When a microbial cell contacts the silane quaternary ammonium ion, it is thought that several mechanisms cause the death of the microbial cell - (1) the quaternary group causes an ionic imbalance in the cell; or (2) the long alkyl chain penetrates into and ruptures the cell. Unlike hypochlorous acid, the silane quaternary ammonium ion destroys the microbe cell without consuming the silane quaternary ammonium ion. The silane quaternary ammonium ion is free to destroy more microbial cells. Therefore, even after the hypochlorous acid has reacted, the silane quaternary ammonium ion remains bonded to the surface to which it was applied to continue to provide antimicrobial properties.

In another aspect of this disclosure, an antimicrobial solution comprises sodium hydroxide, silane quaternary ammonium ion or salt thereof, and water. The silane quaternary ammonium ion or salt thereof is one or more of: 3-(trimethoxysilyl)propyldimethyloctadecyl ammonium ion, 3-(trimethoxysilyl)propyldimethyloctadecyl ammonium chloride, 3-(trihydroxysilyl)propyldimethyloctadecyl ammonium ion, and 3-(trihydroxysilyl)propyldimethyloctadecyl ammonium chloride. The silane quaternary ammonium ion or salt thereof is 0.1 to 10 percent by weight of the solution.

In embodiments, the sodium hydroxide is a component of a catholyte product of the electrolysis of the aqueous solution of sodium chloride, and the catholyte product is combined with the silane quaternary ammonium ion or salt thereof. In embodiments, the antimicrobial solution further includes an anolyte product of the electrolysis of the aqueous solution of sodium chloride, and the anolyte product comprises hypochlorous acid.

It is to be understood that variations and modifications can be made on the aforementioned structure without departing from the concepts of the present disclosure, and further it is to be understood that such concepts are intended to be covered by the following claims unless these claims by their language expressly state otherwise.

## Claims

1. A disinfecting and antimicrobial solution comprising:
hypochlorous acid;
silane quaternary ammonium ion or salt thereof; and
water.

2. The disinfecting and antimicrobial solution of claim 1,
the hypochlorous acid exists in the solution at a concentration of 0.1 to 1000 ppm.

3. The disinfecting and antimicrobial solution of any one of claims 1-2,
the silane quaternary ammonium ion or salt thereof is one or more of:
3-(trimethoxysilyl)propyldimethyloctadecyl ammonium ion,
3-(trimethoxysilyl)propyldimethyloctadecyl ammonium chloride,
3-(trihydroxysilyl)propyldimethyloctadecyl ammonium ion, and
3-(trihydroxysilyl)propyldimethyloctadecyl ammonium chloride.

4. The disinfecting and antimicrobial solution of any one of claims 1-3,
the silane quaternary ammonium ion or salt thereof is 0.1 to 10 percent by weight of the solution.

5. The disinfecting and antimicrobial solution of any one of claims 1-3,
the silane quaternary ammonium ion or salt thereof is 0.75 to 5 percent by weight of the solution.

6. The disinfecting and antimicrobial solution of any one of claims 1-3,
the silane quaternary ammonium ion or salt thereof is 1.9 to 2.1 percent by weight of the solution.

7. The disinfecting and antimicrobial solution of any one of claims 1-6 further comprising:
isopropyl alcohol.

8. The disinfecting and antimicrobial solution of any one of claims 1-7 further comprising:
an anolyte product of electrolysis of an aqueous solution of sodium chloride, the anolyte product comprising the hypochlorous acid.

9. The disinfecting and antimicrobial solution of claim 8 further comprising:
a catholyte product of the electrolysis of the aqueous solution of sodium chloride that produced the anolyte product, the catholyte product comprising sodium hydroxide.

10. An antimicrobial solution comprising:
sodium hydroxide;
silane quaternary ammonium ion or salt thereof; and
water.

11. The antimicrobial solution of claim 10,
the silane quaternary ammonium ion or salt thereof is one or more of:
3-(trimethoxysilyl)propyldimethyloctadecyl ammonium ion,
3-(trimethoxysilyl)propyldimethyloctadecyl ammonium chloride,
3-(trihydroxysilyl)propyldimethyloctadecyl ammonium ion, and
3-(trihydroxysilyl)propyldimethyloctadecyl ammonium chloride.

12. The antimicrobial solution any one of claims 10-11,
the silane quaternary ammonium ion or salt thereof is 0.1 to 10 percent by weight of the solution.

13. The antimicrobial solution of ay one of claims 10-12 further comprising:
isopropyl alcohol.

14. The antimicrobial solution of any one of claims 10-13 further comprising:
a catholyte product of electrolysis of an aqueous solution of sodium chloride, the catholyte product comprising the sodium hydroxide.

15. The antimicrobial solution of claim 14 further comprising:
an anolyte product of the electrolysis of the aqueous solution of sodium chloride, the anolyte product comprising hypochlorous acid.
